Europäisches Patentamt

European Patent Office (11) Publication number: **0 042 376**

Office européen des brevets **B1**

(19)

(12) **EUROPEAN PATENT SPECIFICATION**

(45) Date of publication of patent specification: **14.03.84**    (51) Int. Cl.³: **C 10 L 1/02, C 10 L 9/00**

(21) Application number: **80900288.4**

(22) Date of filing: **08.11.79**

(86) International application number:
**PCT/US79/00988**

(87) International publication number:
**WO 81/01296 14.05.81 Gazette 81/12**

(54) **PROCESS FOR BENEFICIATING AND STABILIZING COAL/OIL/WATER FUELS.**

(43) Date of publication of application:
**30.12.81 Bulletin 81/52**

(45) Publication of the grant of the patent:
**14.03.84 Bulletin 84/11**

(84) Designated Contracting States:
**DE FR GB LU SE**

(56) References cited:
**US - A - 3 268 071**
**US - A - 3 577 337**
**US - A - 3 941 552**
**US - A - 4 021 206**
**US - A - 4 054 506**
**US - A - 4 156 593**

(73) Proprietor: **Convair Investments Limited**
**E.D. Sassoon Bldg. Parliament Street P.O. Box N3045**
**Nassau Bahamas (US)**

(72) Inventor: **COTTELL, Eric C.**
**Private Road**
**Bayville, NY 11709 (US)**

(74) Representative: **Dr. E. Wiegand Dipl.-Ing. W. Niemann Dr. M. Kohler Dipl.-Ing. C. Gernhardt Dipl.-Ing. J. Glaeser Patentanwälte Herzog-Wilhelm-Strasse 16 D-8000 München 2 (DE)**

## Process for beneficiating and stabilizing coal/oil/water fuels

Background of the invention

In United States Letters Patent No. 3,941,552 there is disclosed a process in which a mixture of water/oil/coal is subjected to intense sonic agitation which shall be referred to in this specification as "sonification" sufficient to cause cavitation to thereby stabilize the mixture which can then be stored or piped and utilized as a fuel.

Furthermore there had been proposed a method of beneficating coal by mixing the same in particulate form with water and sonifying the mixture to reduce the size of the coal particles by, it is hypothesized the bombardment to which the particles are subjected because of the cavitation. During that process the pyrites and ash are loosened from the coal particles and are separated out with the water.

In practicing the invention of United States Letters Patent No. 3,941,552, it sometimes occurred that the final product appeared grayish and exhibited an apparent instability in that the aqueous phase or, at least part of it appeared to be separating from the mixture.

While very careful proportioning of the water/oil/coal constituents of the mixture would eliminate this apparent instability, it was not always possible in a continuous on-the-line production of the fuel to take such care, particularly if it was desired to change the sequence of mixing the constituents.

What had been occurring, however, in the apparently separated fuel product, was that the coal and hydrocarbon oils being naturally lyophobic or repellent to water, the hydrocarbon oil acted as a bridging agent to wet the coal, and when the mixture was subjected to agitation, the hydrocarbon oil and coal tended to agglomerate and to reject the water. Inasmuch as the water/coal/hydrocarbon oil mixture had been sonified, it was determined that when the water was separated out from the agglomerated mass, it contained a great deal of ash.

The separating out of the ash from the mixture is of course desirable and with the experience just discussed, it was decided to modify the process to beneficiate the coal particulate and to include coarse grinding followed by froth flotation or other separation method, followed by wet grinding to a small uniform size, followed by sonification followed by an agglomeration step to rid the mixture of ash and water before finalizing the product.

It also became clear that if properly modified, the process which would include sonification at various stages, to enhance the reduction of particle size and the beneficiation of coal and the agglomeration of the materials, might also be used in a much wider application of separating solids from liquid suspending media by sonification and agglomeration.

A process for separating solids by agglomeration is disclosed in United States Letters Patent No. 3,268,071 which issued August 23, 1966. That process is one for the agglomeration and separation of mixtures of two different physically separate particulate solids comprising minerals and metals for instance, from an aqueous suspendant liquid, one of the solids being hydrophobic and the second one of the solids being hydrophilic to the suspendant liquid. A bridging liquid is added to the mixture in the suspendant liquid, which bridging liquid preferentially wets only the hydrophobic solids to form a film over the wetted hydrophobic solids. The resulting mixture is then subjected to mechanical agitation and turbulent conditions to flocculate the wetted hydrophobic solids and to compact the resulting flocculates into spherical agglomerates of greater density than that of the suspendant liquid. The agglomerates are then separated from the remaining suspension by screening.

In Canadian Patent No. 1,020,880 which issued on November 15, 1977, "micro agglomeration" is used as a method for displacing the liquid suspendant of a mixture of particulate material and liquid suspendant. That method includes the provision of a mixture containing particles having surfaces which in part are resistant to wetting by an agglomerating liquid and includes adding to such a mixture, to displace a substantial amount of the liquid suspendant therefrom, the agglomerating liquid at a specified ratio to the solids in the mixture, then agitating the mixture containing the agglomerating liquid in a mixing device until the particulate material is micro agglomerated from the mixture by the agglomerating material and then separating the micro agglomerates from the liquid suspendant.

In Canadian Patent No. 1,039,059 which issued August 26, 1978, a method of separating inorganic material from coal is disclosed comprising providing the coal containing the inorganic materials in particulate form, as a suspension with a liquid hydrocarbon oil, mixing an aqueous agglornerating liquid, which is immiscible with the liquid hydrocarbon oil with the suspension, mixing a particulate material having a hydrophilic surface with the suspension, agitating the suspension with the aqueous agglomerating liquid and particulate material having a hydrophilic surface mixed therewith to agglomerate inorganic particulate materials in the suspension with the aid of the particulate material having a hydrophilic surface, while leaving at least a major portion of the particulate coal dispersed in the liquid hydrocarbon oil, and then separating the inorganic material from at least a major portion of the liquid hydrocarbon oil and pulverized coal.

In these various prior art publications, just discussed, the usual suspendant liquid is water and the bridging or wetting liquid is an organic liquid preferably insoluble in water, and preferably having high interfacial surface tension between it and the suspendant liquid. Typical bridging agents are benzene, and aliphatic hydrocarbon solvent, such as "Varsol", kerosene, petroleum, lubricating oil liquid chlorinated biphenyl, fuel oil and combinations of these. Of course the suspendant liquid may comprise an organic liquid in which case water would be the preferred bridging agent although glycol, formamide phenol, hydroxylated organic liquids and other liquids which are substantially insoluble in the suspending medium, are also suggested.

It is noted that in the prior art methods, the suspendant, the particulate matter to be agglomerated and the agglomerating liquid are mixed and that mixture is agitated until agglomeration occurs after which the suspendant liquid is separated out.

The invention

The present invention contemplates an optional first step of coarsed grind followed by separation of the major contaminants, followed by wet grinding followed by pre-sonification of the suspendant liquid and the particulate material to reduce the size of the particulate material and in case of coal, to beneficiate the same by releasing from the coal particles, particles of ash and other impurities. A minimal amount of the agglomerating liquid may then be added to the sonified slurry and this mixture is then agitated preferably by sonification sufficient to induce cavitation in the mixture. It has been found that with sonification in the agglomeration step, less agglomerating liquid is required. After sonified agitation, the mixture may then be screened to separate out the suspendant liquid. Further bridging liquid may then be added to produce the final product.

As a first optional step in practicing the present invention, the run of the mine coal is coarsely ground to between 0.84 and 0.25 mm (20 and 60 mesh), sufficient to release most of the contaminants. Water is then added to make a slurry of about 10 to 60% by weight of water and the mixture is subjected to a conventional separating process such as froth flotation to remove the bulk of the contaminants. This means that less energy is used to grind the coal properly and the grinding equipment is subject to less wear since the abrasive particles are removed. Additionally by treating this "coarse" grind there is virtually no loss of small particles which are not good candidates for conventional separating methods in a liquid medium but are good candidates for the agglomeration process described herein.

In the process as it applies to the manufacture of coal/oil/water fuels, where the desired end product comprises 50% by weight coal, between 30% and 40% by weight of hydrocarbon oil and between 10% and 20% by weight of water, the present process consists of first mixing a slurry of coal particulate and water the coal being approximately 1/3 the weight of the aqueous mixture. The mixture is then sonified to break the ash and pyrites from the coal and hydrocarbon oil as the bridging liquid is added. Sonification of this mixture causes the coal and hydrocarbon oil to agglomerate. This mixture is screened to separate out the ash and water from the agglomerated mass. Hydrocarbon oil is then added to the agglomerated mass, which still retains some water, to the extent desired for the final product.

Depending upon the percentage of water in the agglomerated coal, final sonification or irradiation as it is also called, of the fuel with treatment by cavitation will cause some free water to be leached out of the complete mixture and it has been found that the water content tends to migrate to the outside of the mixture. In other words if the mixture is being conveyed through a pipe there is a layer of water between the mixture and the bore of the pipe which facilitates the passage of this thixotropic liquid through the pipe.

The amount of water left in the agglomerated coal can be carefully controlled by the amount and type of hydrocarbon oil which is introduced in the spherical agglomeration process just after the coal/water mixture has been irradiated and when the mixture is about to be further irradiated after the introduction of the hydrocarbon oil as the agglomerating medium.

It has been noted that the requirement in terms of quantity of hydrocarbon oil in the mixture for agglomeration is less when irradiation is used than in the processes described in the prior art in which 30% by weight of hydrocarbon oil and more is used in the agglomeration steps. In the processes to be described herein, less than 10% hydrocarbon oil by weight appears to be satisfactory. The advantage of course is that the less hydrocarbon oil used in the agglomeration step, the less expensive the process is. Additionally, in sonic irradiation, the percentage of solids in the liquid can be much higher, which represents a further advantage of the use of sonification in the process.

Description of the figure

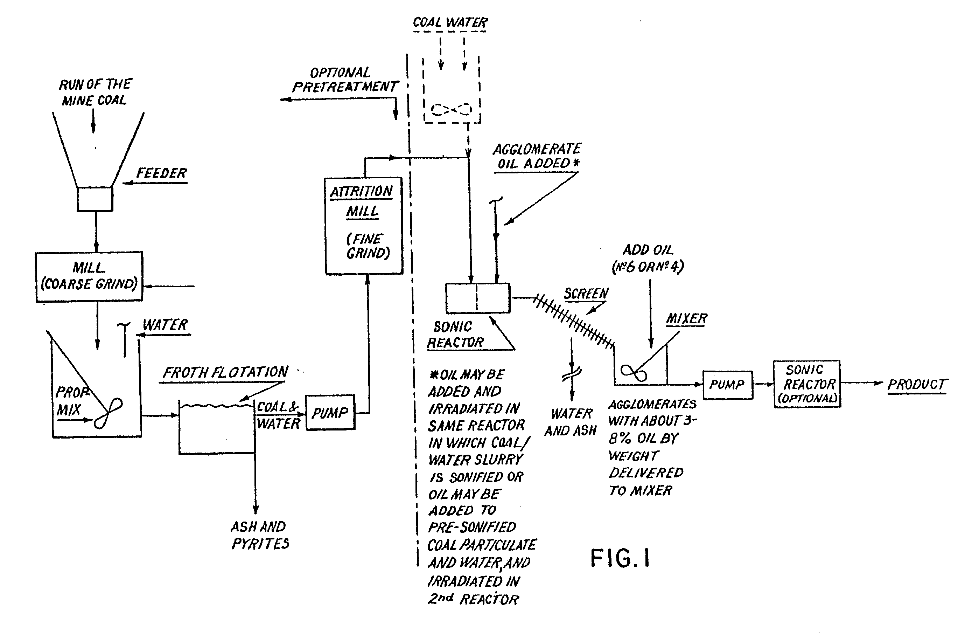

Figure 1 is a flow diagram of the process of the invention.

While the invention will be discussed mainly with a relation to the production of coal/oil/water mixtures for fuels, it will be appreciated that utilization of sonification in conjunction with spherical agglomeration is not limited to coal/oil/water mixtures but is useful with spherical agglomeration for many separating operations as for instances those discussed in the prior art; i.e. the separation of solids from their suspendant liquid by the addition of a bridging liquid so that the lyophobic particles separate from the suspension after agglomeration. It is noted that if water is the suspendant liquid, then an organic liquid preferably insoluble in water would be the bridging liquid and visa-versa. The object is that the bridging liquid will agglomerate with the solid in the suspendant liquid after which the suspendant liquid and the agglomerated mass can be separated.

It is within the purview of this invention to sonify the initial mixture of the suspendant liquid and solids and then to again utilize sonification after the agglomerating medium is added and then preferably to again sonify any later mixture of the agglomerated mass with more agglomerating medium, for instance.

Specifically and with reference to Fig. 1, the invention has been carried out in the production of coal/oil/water fuels.

The coal may first be coarsely ground and water is added and initial separation of contaminants with the water is carried out by froth flotation, although other conventional separation methods may be used. The "clean" coal/water slurry is then subjected to a grinding operation to grind the coal to between 0.149 and 0.048 mm (100 and 300 mesh).

If this first step is optionally not carried out, the suspendant liquid, water in this instance may be fed from a water supply into a container and mixed with coal in particulate form preferably with a typical particle size of 50 to 100 $\mu$m or less, although larger particle sizes to 200 $\mu$m or more may be used. The mixture preferably comprises 60% by weight of water and 40% by weight of coal. The mixture may be stirred by a propeller shown in phantom within the container in Fig. 1 and at any rate the slurry is pumped to an ultrasonic reactor of the type disclosed in US Patent No. 3,941,552 and in US Patent Nos. 3,715,104 and 3,749,318. Now the slurry is subjected to sonification, that is to violent sonic agitation with an intensity sufficient to cause cavitation and for a time sufficient to reduce the particle size of the coal particulates even further as a result of the pyrites including ash breaking away from the coal. To this slurry, the agglomerating medium may be added but in the preferred "on line" process, the slurry is pumped to a container where a relatively small amount of the agglomerating medium, in this instance between 1% and 3% by weight of the coal is added to the slurry. The slurry with the agglomerating medium is then agitated and according to the invention, preferably sonified again with sufficient intensity to cause cavitation.

The agglomeration step is very much enhanced by the use of sonification that is it is quicker and less agglomerating medium has to be used than if agitation of less intensity is applied to the mixture.

The resultant mixture after sonification of the water/coal slurry and agglomerating hydrocarbon oil medium comprises the agglomerated mass of coal and hydrocarbon oil and a mixture of water and ash which is lyophilic to the agglomerating medium but not to water. The mixture is then screened so that the water and ash are screened out and the agglomerated mass of coal and hydrocarbon oil is recovered.

The screened out water/ash may be brought back upstream through a separating step where the ash and water are separated and the water returned to the water supply to the initial container.

In fact, however, the agglomerated mass also contains a small amount of water which is quite acceptable to the desirable qualities of the final product sought in this process, i.e. a coal/oil/water fuel with between 10% and 20% by weight of water. To the agglomerated mass is added hydrocarbon oil sufficient to produce a blended coal/oil/water product consisting of 50% by weight of coal between 30% and 40% by weight of hydrocarbon oil and between 10% and 20% by weight of water. The coal/oil/water mixture may then be agitated or sonified again and then may be stored piped or used as a fuel. Sonification at this point in the process tends to separate out the water which tends to migrate to the outside of the mass to thus enhance pipe travel characteristics of the fuel.

There have been many experiments conducted in the laboratory involving the proportions of the constituent elements to be used in the above described process. Furthermore, experimentation has been carried out utilizing number 2 oil and number 6 oil both in the agglomerating and finalizing steps or in series (number 2 is one and number 6 is the other) with varying results in the end product as concerns viscosity and thixotropy.

In one experiment it was the object to determine whether spherical agglomeration would occur utilizing a number 2 oil in the agglomerating step. In that example 100 grams of coal having a particle size of approximately 70 $\mu$m was mixed with 200 grams of water in a blender. The resultant slurry was irradiated; i.e. sonified. To the resultant irradiated slurry first two grams of number 2 oil were added and the mixture was then irradiated. Agglomeration did not appear to occur. Two more grams of number 2 oil were added and the resultant mixture was again irradiated. No spherical agglomeration appeared to occur. Finally two further grams, six in all, of number 2 oil were added and the resultant mixture was irradiated and spherical agglomeration did occur. This mixture was passed through a sieve, where the water and ash which had been separated from the coal, was separated out. To the agglomerated mass 40 grams of number 6 oil were added and the mixture was agitated. The resultant end product exhibited good thixotropic properties.

## Claims

1. The process for producing coal/oil/water fuel comprising making a slurry of water and coal particulate having ash and pyrites adhered to the coal particles, sonifying the slurry with sufficient intensity to cause cavitation and to cause the breaking away of ash and pyrites from the coal particles to thereby reduce the size of the coal particles, adding an amount of oil of less than 5% by weight of the coal particulate to the sonified slurry to thereby cause spherical agglomeration of the oil and coal portions of the mixture and separation of the water and ash and pyrites broken away from the coal particles, sonifying the slurry and oil mixture to enhance the spherical agglomeration process screening out water and any non-agglomerated particles of ash and pyrites from the coal particulate but leaving residual water in the agglomerate mass and adding oil to the agglomerate mass to form a stable fuel of coal/oil/water comprising about 10 to 20% by weight of water, 30 to 40% by weight of oil and 50% by weight of coal.

2. The process of Claim 1 in which the agglomerate mass and oil mixture is sonified to further stabilize the coal/oil/water fuel and to separate out water to have the water migrate to the outside of the mass.

3. The process of Claim 1 wherein a run of mine coal is first coarsely ground to 0.84 to 0.25 mm (20—60 mesh USS) to release contaminants therefrom, water is added to form a slurry and the slurry is subjected to a separation process in which water and contaminants are separated from the coal particulate, water is added to the particulate and this slurry is subjected to further grinding to bring the particulate size down to 0.149 to 0.048 mm (100—300 mesh USS), then the slurry is sonified in accordance with the process of Claim 1.

4. A process for separating solids and for agglomerating other solids in suspendant and bridging liquids comprising adding to a suspendant liquid particulate having integral parts thereof which are lyophobic to the bridging liquid and integral parts thereof which are lyophilic to the bridging liquid, sonifying the mixture to thereby cause the lyophobic and lyophilic particles to break away from one another within the suspendant liquid, adding a bridging substance to the sonified mixture and to agglomerate the bridging liquid and lyophilic particles, separating out the suspendant liquid and the lyophobic particles.

5. The process of Claim 4 in which the mixture of bridging substance and the sonified mixture is agitated by sonification to quicken the agglomeration of the bridging liquid and lyophilic particles and to enable the reduction of the amount of bridging substance in the step of adding such substance to the previously sonified mixture.

6. The process of Claim 5 in which further bridging liquid is added to the agglomerated mixture after the suspendant liquid and lyophobic particles are separated out.

7. The process of Claim 6 in which the final mixture is sonified.

## Patentansprüche

1. Verfahren zur Herstellung von Kohl/Öl/Wasser-Brennstoff, dadurch gekennzeichnet, daß eine Aufschlämmung aus Wasser und Kohleteilchen mit daran anhaftender Asche und anhaftenden Pyritmaterialien hergestellt wird, die Aufschlämmung mit ausreichender Intensität mit Ultraschall behandelt wird (sonified), um eine Hohlraumbildung zu verursachen und um ein Wegbrechen von Asche und Pyritmaterialien von den Kohleteilchen herbeizuführen und um dadurch die Größe der Kohleteilchen zu verringern, Öl in einer Menge von weniger als 5 Gew.% der Kohleteilchen zu der ultraschallbehandelten Aufschlämmung zugegeben wird, um dadurch eine kugelförmige Agglomeration der Öl- und Kohleanteile der Mischung und eine Trennung von Wasser und der von den Kohleteilchen weggebrochenen Asche und Pyritmaterialien herbeizuführen, die Aufschlämmungs- und Ölmischung mit Ultraschall behandelt wird, um den Vorgang der kugelförmigen Agglomeration zu steigern, Wasser und irgendwelche nichtagglomerierten Teilchen von Asche und Pyritmaterialien von den Kohleteilchen abgesiebt werden, wobei ein Rest Wasser in der Agglomeratmasse zurückgelassen wird, und Öl zu der Agglomeratmasse zugegeben wird, um einen stabilen Brennstoff aus Kohle/Öl/Wasser zu bilden, der etwa 10 bis 20 Gew.% Wasser, 30 bis 40 Gew.% Öl und 50 Gew.% Kohle enthält.

2. Verfahren nach Anspruch 1, dadurch gekennzeichnet, daß die Agglomeratmasse und Ölmischung mit Ultraschall behandelt wird, um den Kohle/Öl/Wasser-Brennstoff weiter zu stabilisieren und um Wasser auszuscheiden, wobei das Wasser zu der Außenseite der Masse wandert.

3. Verfahren nach Anspruch 1, dadurch gekennzeichnet, daß eine Förderkohle zunächst grob auf 0,84 bis 0,25 mm (20 bis 60 mesh USS) gemahlen wird, um die Verunreinigungen hieraus freizugeben, Wasser zur Bildung einer Aufschlämmung zugegeben wird, die Aufschlämmung einem Trennverfahren unterworfen wird, in welchem Wasser und Verunreinigungen von den Kohleteilchen abge-trennt werden, Wasser zu den Teilchen zugegeben wird und diese Aufschlämmung einem weiteren Mahlen unterworfen wird, um die Teilchengröße auf 0,149 bis 0,048 mm (100 bis 300 mesh USS) zu erniedrigen, worauf die Aufschlämmung gemäß dem Verfahren nach Anspruch 1 mit Ultraschall behandelt wird.

4. Verfahren zum Trennen von Feststoffen und zum Agglomieren von anderen Feststoffen in Aufschlämmungs- und Bindungs- oder Benetzungsflüssigkeiten (bridging liquids), dadurch gekennzeichnet, daß man zu einer Aufschlämmungsflüssigkeit Teilchen mit integralen Teilen, welche gegenüber der Bindungs- oder Benetzungsflüssigkeit lyophob sind, und mit integralen Teilen, welche gegenüber der Bindungs- oder Benetzungsflüssigkeit lyophil sind, zusetzt, die Mischung mit Ultraschall behandelt, um dadurch ein Wegbrechen der lyophoben und lyophilen Teilchen voneinander innerhalb der Aufschlämmungsflüssigkeit zu bewirken, eine Bindungs- oder Benetzungssubstanz zu der mit Ultraschall behandelten Mischung zusetzt, um die Bindungs- oder Benetzungsflüssigkeit und lyophile Teilchen zu agglomerieren, und die Aufschlämmungsflüssigkeit und die lyophoben Teilchen abtrennt.

5. Verfahren nach Anspruch 4, dadurch gekennzeichnet, daß die Mischung aus Bindungs- oder Benetzungssubstanz und der mit Ultraschall behandelten Mischung mittels Ultraschall gerührt oder bewegt wird, um die Agglomerierung der Bindungs- oder Benetzungsflüssigkeit und der lyophilen Teilchen zu beschleunigen und um eine Abnahme der Menge der Bindungs- oder Benetzungssubstanz in der Stufe des Zusatzes einer solchen Substanz zu der vorhergehend mit Ultraschall behandelten Mischung zu ermöglichen.

6. Verfahren nach Anspruch 5, dadurch gekennzeichnet, daß weitere Bindungs- oder Benetzungsflüssigkeit zu der agglomerierten Mischung nach der Abtrennung der Aufschlämmungsflüssigkeit und der lyophoben Teilchen zugesetzt wird.

7. Verfahren nach Anspruch 6, dadurch gekennzeichnet, daß die Endmischung mit Ultraschall behandelt wird.

**Revendications**

1. Procédé de production d'un combustible formé de charbon, de pétrole et d'eau, selon lequel on fait une suspension ou bouillie aqueuse de particules de charbon auxquelles adhèrent des cendres et pyrites, on traite la suspension aux ultrasons avec une intensité suffisante pour produire un effet de cavitation et pour désagréger cendres et pyrites des particules de charbon afin de réduire la dimension de celles-ci, on ajoute ensuite à la suspension moins de 5% de pétrole par rapport au poids des particules de charbon pour agglomérer en sphères le pétrole et le charbon et séparer l'eau ainsi que les cendres et pyrites désagrégées, on retraite l'ensemble aux ultrasons pour favoriser l'agglomération en sphères puis on tamise pour éliminer l'eau et toutes particules non-agglomérées de cendres et pyrites, mais en laissant l'eau résiduelle de la masse agglomérée, et on ajoute du pétrole à la masse agglomérée pour former un combustible stable constitué de charbon, de pétrole et d'eau, comprenant environ 10 à 20% en poids d'eau, 30 à 40% de pétrole et 50% de charbon.

2. Procédé selon la revendication 1 dans lequel on traite aux ultrasons la masse agglomérée et le mélange de pétrole pour mieux stabiliser le combustible et séparer l'eau en la faisant migrer vers l'extérieur de la masse.

3. Procédé selon la revendication 1 dans lequel on broie d'abord grossièrement un tout-venant de mine de houille en grains de 0,25 à 0,85 mm pour en séparer les impuretés, on lui ajoute ensuite de l'eau pour former une suspension ou bouillie que l'on soumet à une opération de séparation pour séparer eau et impuretés des particules de charbon, puis on rajoute de l'eau aux particules et on soumet la suspension à un nouveau broyage en grains de 0,05 à 0,15 mm, et finalement on traite la suspension aux ultrasons comme dans la revendication 1.

4. Procédé pour séparer des matières solides et pour agglomérer d'autres matières solides dans un milieu de suspension et des liquides liants, selon lequel on ajoute à un liquide de suspension des particules dont des parties intégrales sont lyophobes à l'égard du liquide liant et des parties intégrales sont lyophiles à l'égard de ce liquide, on traite le mélange aux ultrasons pour désagréger les unes des autres dans le liquide particules lyophobes et particules lyophiles, puis on ajoute au mélange une substance liante pour agglomérer le liquide liant et les particules lyophiles, et on sépare le liquide de suspension et les particules lyophobes.

5. Procédé selon la revendication 4 dans lequel on agite par ultrasons le mélange de la substance liante et du mélange traité aux ultrasons pour accélérer l'agglomération du liquide liant et des particules lyophiles et pour pouvoir réduire la quantité de substance liante qui est ajoutée au mélange préalablement traité aux ultrasons.

6. Procédé selon la revendication 5 dans lequel on ajoute une nouvelle quantité de liquide liant au mélange aggloméré après que le liquide de suspension et les particules lyophiles ont été séparés.

7. Procédé selon la revendication 6 dans lequel le mélange final est traité aux ultrasons.

FIG.1

COAL WATER

RUN OF THE MINE COAL

OPTIONAL PRETREATMENT

FEEDER

AGGLOMERATE OIL ADDED *

ATTRITION MILL (FINE GRIND)

ADD OIL (N°6 OR N°4)

MILL (COARSE GRIND)

WATER

SONIC REACTOR

SCREEN

MIXER

FROTH FLOTATION

PROP. MIX

COAL & WATER

PUMP

* OIL MAY BE ADDED AND IRRADIATED IN SAME REACTOR IN WHICH COAL/WATER SLURRY IS SONIFIED OR OIL MAY BE ADDED TO PRE-SONIFIED COAL PARTICULATE AND WATER, AND IRRADIATED IN 2ⁿᵈ REACTOR

WATER AND ASH

AGGLOMERATES WITH ABOUT 3-8% OIL BY WEIGHT DELIVERED TO MIXER

PUMP

SONIC REACTOR (OPTIONAL)

PRODUCT

ASH AND PYRITES

FIG. 1

0 042 376